# EUROPÄISCHE PATENTANMELDUNG

(11) **EP 2 420 409 A1**
(43) Veröffentlichungstag der Anmeldung: **22.02.2012**
(21) Anmeldenummer: 10014103.5
(22) Anmeldetag: 17.11.2010
(51) Int. Cl.: B60Q 1/46, B60Q 1/52

(54) **Zentrales elektronisches Frühwarnsystem der Warnblinkanlage**

(30) Priorität: 29.07.2010 DE 102010032782
(71) Anmelder: Hrdlicka, Jaroslav, 82178 Puchheim (DE)
(72) Erfinder: Hrdlicka, Jaroslav, 82178 Puchheim (DE)

(57) **Zusammenfassung**

+ Durch das zentrale, elektronisch gesteuerte Auslösesystem der Warnblinkanalge kann nachkommender Verkehr sehr viel schneller auf unvorhersehbare Ereignisse wie bspw. Auffahrunfälle oder umgefallene Fahrzeuge reagieren.
+ Zudem ersetzt ein zentral gesteuertes, elektronisches Auslösesystem die Betätigung der Warnblinkanalge durch den ggf. verletzten Fahrer des Fahrzeugs und ist so geeignet, nachfolgende Unfälle zu vermeiden.
+ Hierdurch ergibt sich ein hohes Vermeidungspotential von Auffahrunfällen bei ruhendem Verkehr.

## Beschreibung

### Gegenstand der Erfindung: Warnblinkanalage, technisch-elektrische Verbesserung der Warnblinkanlage

+ unmittelbares, sofortiges Einschalten der Warnblinkanalge bereits bei kleinerem Aufprall, ohne dass hierfür notwendigerweise der Airbag ausgelöst wird.
+ unmittelbares, automatisches Einschalten der Warnblinkanalage im Falle einer Vollbremsung.
+ unmittelbares, automatisches Einschalten der Warnblinkanalage bei Kippen des Fahrzeugs.
+ unmittelbares, automatisches Einschalten der Warnblinkanalage durch verknüpfte oder unverknüpfte Informationen oder Signale.
+ zur Erhöhung der Signalwirkung soll zusätzlich zur Warnblinkanlage die Nebelschlussleuchte aktiviert werden.

### Beschreibung der Erfindung

Technische Verbesserung des Sicherheitsaspekts der Warnblinkanalage, die im Falle von Unfällen o.ä. eine fahrerunabhängige Auslösung de Warnblinkanalage ermöglicht und somit den Unsicherheitsfaktor Mensch ausschaltet.

Das zentrale Steuerungselement 6 erhält Signale oder Informationen 2 von Sensoren bzw. Steuergeräten 1 die bereits im Fahrzeug vorhanden sein können wie bspw. ABS, Airbag, Lage- und Crashsensoren usw.

Diese Signale oder Informationen können je nach deren Bedeutung entweder jedes für sich 7 die Warnblinkanlage 5 und die Nebelschlussleuchte 8 auslösen oder werden verknüpft 3/4 um die Warnblinkanlage und die Nebelschlussleuchte auszulösen.

### Gegenstand der Erfindung

Durch ein zentrales Steuerungselement soll die Warnblinkanlage fahrerunabhängig automatisch im Falle der Auslösung des Airbags, im Falle der Aktivierung des ABS, im Falle des Kippens des Fahrzeugs sowie im Falle kleinerer Aufprallunfälle, die nicht zu einer Auslösung von Airbag und/oder ABS führen.

Das zentrale Steuerungselement kann auch als zusätzliches Softwaremodul in einem bereits vorhandenen Steuergerät realisiert werden.

### Resultat:

Durch die zentral gesteuerte Aktivierung der Warnblinkanlage im Falle typischer Unfallhergänge, wie Auslösung des Airbags, Auslösung des ABS oder Umkippen des Fahrzeugs wird gewährleistet, dass die Warnblinkanalge unabhängig vom "Unsicherheitsfaktor Mensch" aktiviert wird. Dies führt zu einer erheblichen Erhöhung der Verkehrssicherheit.

### Rettung von Menschenleben und große Sicherheitsvorteile durch das zentrale elektronische Frühwarnsystem der Warnblinkanlage.

Beispiele:
1) Liegt ein Fahrzeug auf der Autobahn auf dem Dach sieht man im Normalfall nur die Lichter. Zum Abbremsen wird das Hindernis möglicherweise viel zu spät als solches erkannt. Durch die aktivierte Warnblinkanlage und die Nebelschlussleuchte wird der nachfolgende Verkehr bedeutend früher auf die Gefahrenstelle aufmerksam und kann einen Zusammenstoss sicher verhindern. Die Gefahr von Massenkarambolagen wird dadurch ebenfalls gebannt.
2) Gerät ein Fahrzeug von der Fahrbahn ab und kommt in einem Graben, am Ende einer Böschung oder gar im Wald zum Stillstand, wird es durch das Frühwarnsystem deutlich schneller entdeckt und Rettungsdienste verlieren keine Zeit bei der Suche. Ebenso ist die Ortung des Fahrzeugs eines Verunglückten per Hubschrauber schneller und effizienter möglich.

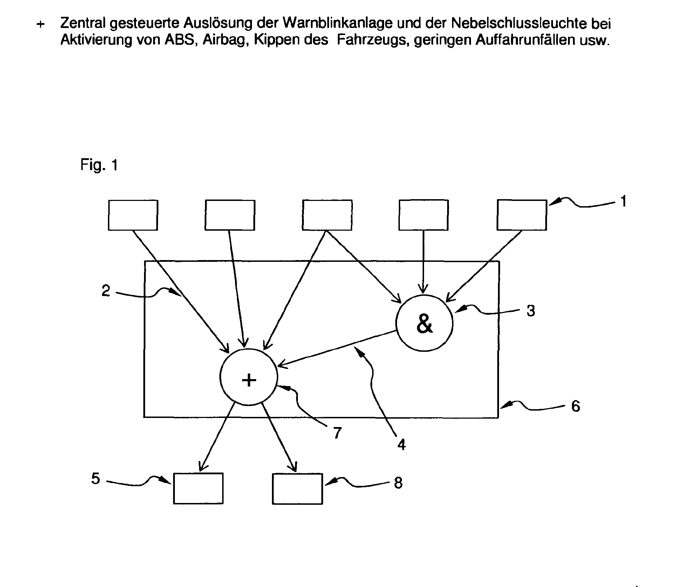

## Patentansprüche

1. Dieses zentral gesteuerte, elektronische Auslösesystem der Warnblinkanalge ist bis heute unbekannt.

2. Durch die zentral elektronisch gesteuerte Auslösung der Warnblinkanalge im Falle eines Auffahrunfalls, Vollbremsung oder Umfallen des Fahrzeugs ist eine unmittelbare Auslösung der Warnblinkanalge gewährleistet, die zuverlässiger und schneller reagieren kann als jeder menschliche Fahrer.

3. Durch die zentrale, elektronische Steuerung der Warnblinkanlage mittels eines zentralen Steuerungssystems kann eine erhebliche Verbesserung der Verkehrssicherheit von Fahrzeugen erreicht werden.

4. Die Signalwirkung der Warnblinkanlage wird durch zusätzliche Aktivierung der Nebelschlussleuchte erhöht.
